# EUROPEAN PATENT APPLICATION

(11) **EP 4 818 793 A1**
(43) Date of publication of application: **07.10.2026**
(21) Application number: 25168291.0
(22) Date of filing: 03.04.2025
(51) Int. Cl.: G02C 5/14, G02C 11/04, G02C 11/00, G02C 11/02

(54) **ILLUMINATED EYEWEAR FIXTURE**

(71) Applicant: Low Vision Center, 69710 Tel Aviv (IL)
(72) Inventor: Kremer, Adi, 4204000 Netanya (IL)
(74) Representative: Lichtnecker, Markus Christoph

(57) **Abstract**

An illuminated eyewear fixture 101, comprising one frame rod 105, power source 109 integrated within the frame rod, light source 103 fixed at one of terminal ends of the frame rod, wherein the frame rod 105 is removably attached to a rim of an eyewear that houses at least one lens, by replacing temples of the eyewear, wherein the light source 103 is configured to be located at outer edges of the rim when the frame rod 105 is attached to the rim, and wherein the light source 103 is configured to light up space and objects in front of the eyewear.

## Description

The present disclosure relates generally to eyewear. The disclosure, more particularly, relates to illuminated fixtures for eyewear that can be removably attached to the eyewear.

Eyewear plays a crucial role for individuals with weak eyesight by improving vision and enhancing clarity. For those with refractive errors like nearsightedness, farsightedness, or astigmatism, glasses help focus light onto the retina, correcting blurry vision and allowing individuals to perform daily tasks more easily. Eyewear can also be essential for reducing eye strain, especially during prolonged screen time or reading, by providing the necessary lens prescriptions.

However, while eyewear is beneficial in many situations, it falls short in certain conditions, especially when it comes to low-light or dark environments. One of the primary drawbacks of standard corrective glasses is that they do not enhance vision in dim lighting. In fact, they can sometimes make it harder to see, as they do not account for the reduced amount of light entering the eye. Lenses designed to focus light or correct vision will still struggle to function properly if the lighting conditions are poor. As a result, people with weak eyesight may find it difficult to navigate in low-light conditions, such as reading in dimly lit rooms, or walking in poorly lit areas.

In dark settings, the eyes naturally dilate to allow more light in, but glasses can prevent this process from being fully effective. The prescription lenses might still be tuned for regular, well-lit conditions and fail to enhance the amount of light reaching the retina, which leads to inadequate visual performance. Furthermore, the reflections and glare from eyewear in low light can make visibility even worse, creating additional distractions or blurring.

People with low vision due to various conditions such as macular degeneration, diabetic retinopathy, glaucoma, and degenerative retinal diseases require enhanced lighting to carry out daily activities such as reading, hobbies, recognizing small details in their surroundings, and mobility.

Furthermore, individuals with low vision due to Age-related Macular Degeneration (AMD) often face significant challenges when relying on regular eyewear. Standard eyewear are typically designed to correct refractive errors like nearsightedness or farsightedness, but they do little to address the vision loss associated with AMD, which primarily affects the central part of the retina. As a result, those with AMD may struggle with tasks that require sharp central vision, such as reading, recognizing faces, or driving. Regular eyeglasses may not provide the necessary magnification or contrast enhancement to compensate for the visual impairment. Furthermore, because AMD can cause blurred or distorted vision, wearing standard glasses can sometimes exacerbate difficulties, leaving individuals frustrated and unable to perform daily activities with ease. Specialized visual aids are often required to help manage the symptoms of AMD more effectively.

Moreover, some individuals may experience discomfort, such as eye strain, fatigue, or headaches, when wearing glasses in dark environments. This is because the eyes must work harder to compensate for the lack of proper lighting, while the lenses themselves don't provide any added benefit in these conditions.

To address these issues, there are specialized eyewear options designed to mitigate the effects of low light, such as glasses with anti-reflective coatings or lenses optimized for night driving. However, even these solutions cannot fully replicate the natural ability of the eyes to adapt to darkness. Therefore, while glasses are an essential tool for those with weak eyesight, they remain limited in their effectiveness in low-light conditions, and individuals with visual impairments may need to rely on additional aids or techniques to ensure safety and optimal vision in such environments.

Current eyewear generally suffers from various drawbacks and disadvantages, which would be advantageous to address.

In one suitable implementation, an illuminated eyewear fixture is provided. The illuminated eyewear fixture comprises at least one frame rod; at least one power source integrated within a lanyard of the eyewear; at least one light source fixed at one of the terminal ends of the frame rod; wherein the frame rod is removably attached to a rim of an eyewear that houses at least one lens, by replacing temples of the eyewear, wherein the light source is configured to be located at outer edges of the rim when the frame rod is attached to the rim, and wherein the light source is configured to light up space and objects in front of the eyewear.

The advantage of the illuminated eyewear fixture aims to enhance visibility for the wearer by incorporating light directly into the eyewear.

In one possible variation, at least one frame rod is removably attached to the rim of the eyewear using at least one screw, wherein the temples of the eyewear are replaced by the frame rod.

In another potential implementation, the two individual frame rods replace the two temples of the eyewear, wherein the two individual light sources are located on the terminal ends of the individual frame rods.

In still further implementations, the frame rod is configured to be swapped to the multiple eyewear.

In still other implementations, the power source is connected to the light source, and wherein the power source is configured to be rechargeable using external power sources.

In still other implementations, the frame rod is a single molded structure, wherein the frame rod houses electronic circuitry within the frame rod.

In still other implementations, the two frame rods are connected using at least one electrical wire extending from the other terminal end opposite to the light source, wherein the electrical wire connects the power source to both the light sources on the two frame rods and is configured to work as a lanyard for the eyewear.

A more complete understanding of the present disclosure, and the attendant advantages and features thereof, will be more readily understood by reference to the following detailed description when considered in conjunction with the accompanying drawings, wherein:
Fig. 1 is an isometric view of regular eyewear which is a prior art;
Fig. 2 is an isometric view of one possible implementation of an illuminated eyewear fixture according to the present disclosure;
Fig. 3 is an exploded isometric view of one possible implementation of an illuminated eyewear fixture according to the present disclosure, and
Fig. 4 is a top, plan view of the implementation of an illuminated eyewear fixture according to the present disclosure.

In one suitable implementation, an illuminated eyewear fixture is provided. The illuminated eyewear fixture comprises at least one frame rod; at least one power source integrated within a lanyard of the eyewear; at least one light source fixed at one of the terminal ends of the frame rod; wherein the frame rod is removably attached to a rim of an eyewear that houses at least one lens, by replacing temples of the eyewear, wherein the light source is configured to be located at outer edges of the rim when the frame rod is attached to the rim, and wherein the light source is configured to light up space and objects in front of the eyewear.

Throughout the present disclosure, the term *'illuminated eyewear fixture'* refers to a functional element that is designed to integrate lighting into the structure of general eyewear, with an aim of combining style and utility. It essentially enhances the user's experience by incorporating a light source into the eyewear, allowing for hands-free illumination while still serving its primary purpose as eyewear. The fixture consists of at least one frame rod, which is a core component. The frame rod replaces the traditional temples of eyewear the side pieces that extend over the ears to hold the eyewear in place. The frame rod serves not only as a structural part of the eyewear but also houses critical elements like the power source and light source. The eyewear's rim, which holds the lenses, remains intact, while the frame rod attaches to the outer edges of the rim, ensuring the fixture is secure and stable. Furthermore, the power source, typically a battery, is integrated within the lanyard of the eyewear connected to the two frame rods. This eliminates the need for an external power supply, such as a battery pack or separate cords. The light source, such as an LED, is fixed at the terminal end of the frame rod, near the outer edge of the eyewear rim. The light is strategically positioned to illuminate the space and objects in front of the wearer. The light source can be designed to produce various levels of brightness, offering adjustable settings depending on the wearer's needs. This could range from a softer light for reading to a brighter beam for outdoor activities or navigating in low-light environments. The frame rod is removably attached to the rim of the eyewear. This allows the wearer to easily swap or detach the frame rod when not needed, or replace it with a different design or style.

Throughout the present disclosure, the term *'frame rod'* refers to a structural component, similar to a bar or a stem, that is part of the eyewear's design. The frame rod is a key structural and functional component of the illuminated eyewear fixture. The frame rod acts as a replacement for the temples (the side arms) of conventional eyewear. The frame rod has a slender, elongated component that runs along the side of the wearer's head, similar to a temple, but with additional functionality as it houses the power source and light source. The frame rod could be made from lightweight, durable materials such as plastic, aluminum, or carbon fiber, to ensure it's both strong enough to hold the power components and comfortable for the wearer. Furthermore, the length and flexibility of the frame rod may be designed to match standard eyewear sizes, ensuring a proper fit when attached to the eyewear rim. The technical advantage of the frame rod in the illuminated eyewear fixture is that it is a multi-functional component that works as a light source, and can house the electronic circuitry within itself. It is designed to be removably attached to the rim of the eyewear, and when attached, it places the light source at the outer edges of the rim to illuminate the space and objects in front of the wearer. Its integration of power (via the lanyard) and light makes it both practical and aesthetically appealing, ensuring a lightweight and comfortable user experience while providing functional lighting in various conditions. Other technical advantage of the frame rod are that it provides hands-free lighting. With the light source embedded in the frame rod, the wearer has access to constant illumination without needing to carry an external flashlight or hold a light source. This is especially useful in low-light conditions, such as reading at night, walking in dim environments, or finding things in the dark. Furthermore, the frame rods advantageously provides direct light in the right place. Since the light source is positioned at the outer edges of the eyewear and directed forward, it illuminates the area directly in front of the wearer. This ensures better visibility and safety without requiring the wearer to adjust or move around. Furthermore, the frame rod provides an improved vision in low light. The frame rod's built-in light helps the wearer to see more clearly in poorly lit areas. This is particularly useful for tasks like reading in bed, night walking, or emergency situations where an extra light is needed but carrying an additional flashlight is inconvenient. Furthermore, the frame rod provides hands-free navigation for those wearers who need to navigate dimly lit spaces, such as walking on dark streets or in a dimly lit home, the illuminated eyewear offers continuous hands-free lighting, improving both visibility and safety. Furthermore, the frame rod integrates both the power source via the lanyard and light source within the frame itself, maintaining a sleek and lightweight design. The wearer doesn't need to worry about additional bulky items like a handheld flashlight or a separate light source. The removable nature of the frame rod allows for flexibility. It can be attached or detached easily depending on whether the wearer needs the light feature, offering more control over when and how they use the illumination. The frame rod replaces the temples of traditional eyewear, meaning it still serves its primary function of holding the eyewear securely in place. However, with the added benefit of lighting, the wearer doesn't have to compromise on comfort or appearance. Since the frame rod is designed to fit seamlessly with the eyewear, it does not interfere with comfort or wearability. It's lightweight and provides a snug fit, so it can be worn for long periods without discomfort.

The frame rod is designed to be removably attached to the rim of the eyewear by switching the original temples (the side arms of the eyewear that go over the ears). This attachment method involves the use of screws, making it possible to securely attach and detach the frame rod whenever the user wants to switch the original temples with the frame rod. The original temples of the eyewear (the side arms) are typically detached or removed first. These temples usually connect to the eyewear's rim (the frame that holds the lenses) through a hinge or attachment point on each side of the eyewear. Once the original temples are removed, the attachment point on the rim of the eyewear is exposed and ready for the new frame rod to be installed. The frame rod is designed to fit into the place where the original temples were. It will have attachment points that align with the hinges or sockets where the temples were previously connected to the rim. The frame rod has built-in holes or screw threads that correspond to the holes or screw threads on the eyewear's rim. These components allow the frame rod to be securely fixed in place. Screws are used to secure the frame rod to the eyewear's rim, replacing the function of the original temples. The screw holes in the frame rod align with the corresponding holes in the rim. This design ensures that the frame rod is properly positioned to sit firmly and securely on the eyewear. Screws are inserted through the holes in the frame rod and into the rim of the eyewear. Tightening the screws ensures that the frame rod is firmly attached, and the rod won't move or come loose during normal wear. The use of screws allows for a secure but removable connection, meaning the wearer can easily remove the frame rod when it is not needed, or replace it with a different frame rod. Furthermore, to detach the frame rod, the wearer would simply unscrew the screws, freeing the rod from the eyewear. This makes the frame rod highly adaptable, allowing it to be swapped out for other frame rods or replaced as necessary. The screw mechanism ensures that the frame rod is secure enough to stay in place during regular use but easy to remove when needed. The attachment points (holes and screw threads) on both the frame rod and the eyewear's rim are designed to be durable, with a precise fit to ensure the screws are held in place and the connection is stable. The advantages of screw attachment mechanism is that it provides stability. The screws ensure a tight and stable connection between the frame rod and the eyewear, preventing any wobbling or shifting while the eyewear is being worn. Furthermore, it provides the ability to swap one frame rod with another frame rod to enhance the customizability. The ability to swap out the frame rod makes it possible to easily update the look of the eyewear, replace a damaged frame rod, or choose a frame rod with a different light source or design. Throughout the present disclosure, the term *'power source'* refers to the energy source that is integrated within the lanyard connected to the two frame rods that provides the necessary electricity to operate the light source embedded in the frame rod of the illuminated eyewear fixture. The power source can be built into the lanyard itself using a housing to accommodate the power source. This integration allows for a clean, compact, and streamlined design without the need for external power devices. The power source supplies electricity to the light source (e.g., an LED or similar lighting element) fixed at the terminal end of the frame rod. The power source can be at least one battery. The battery is rechargeable. The rechargeable battery can be charged via a port built into the housing of the power source (such as but not limited to, through magnetic connection points, USB-C or micro-USB port), allowing the wearer to recharge the eyewear as needed. The battery can be a replaceable battery that can be swapped out once depleted. The lanyard connected to the two frame rods can house the replaceable and the rechargeable battery. The battery can be a Lithium-Ion (Li-ion) battery, Lithium-Polymer (LiPo) battery, Nickel-Metal Hydride (NiMH) battery, Button/Coin Cell battery, Zinc-Carbon battery, Solid-State battery.

In a possible implementation, the power source housing for eyewear that comprises at least two magnetic connection points. These magnetic connection points on the housing are connected to the power sources located within the housing. These connection points are designed to interact with external charging devices, allowing the eyewear to be recharged efficiently. The housing itself securely contains the power source, such as a battery, and ensures its proper functioning within the eyewear. The magnetic connection points serve as a means to establish a secure connection between the power source housing and an external charger. When the eyewear is placed near the charging station, the magnetic connection points align with corresponding magnets or magnetic surfaces on the charger. This magnetic coupling allows for the transfer of electrical power from the charging station to the power source, enabling wireless recharging without the need for physical connectors or cables. Together, the housing, magnetic connection points, and recharging mechanism provide a convenient and durable solution for keeping the eyewear powered. The magnetic charging system reduces wear and tear associated with traditional connectors, offering both ease of use and improved longevity of the device.

Throughout the present disclosure, the term *'light source'* refers to the component responsible for providing illumination. Its placement and functionality are critical in ensuring that the eyewear serves its intended purpose providing light in front of the wearer's line of sight. The light source is fixed at one of the terminal ends of the frame rod. Particularly, the light source is placed at the outermost end of the frame rod, near the edge of the eyewear's frame (rim). This strategic position of the light source ensure that the light is directed forward, illuminating the area directly in front of the wearer. The light source is aligned with the outer edges of the eyewear's rim, ensuring it does not obstruct the view of the wearer while simultaneously lighting the space in front. The light source can be Light Emitting Diodes LEDs. LEDs are commonly used in applications like this due to their energy efficiency, long lifespan, and ability to be small and compact. Furthermore, Organic LEDs OLEDs, can be used as the light source. OLEDs are even thinner and more flexible, or high-efficiency micro LEDs that can offer bright illumination without taking up much space. The light source is positioned to illuminate objects and spaces in front of the eyewear, creating a focused beam or a more diffused light based on the wearer's requirement. The light source may be designed with adjustable brightness settings, allowing the wearer to control the intensity of the light, depending on the situation. For example, the wearer could choose between a low-intensity light for subtle illumination or a high-intensity beam for brighter lighting in more demanding environments. The light source is powered by the integrated power source (usually a rechargeable battery) within the lanyard connected to the two frame rods. The power is delivered through a small internal circuit that connects the battery to the light, allowing it to function when the user activates it. The light source fixed at the terminal end of the frame rod in the illuminated eyewear fixture is a compact, energy-efficient LED (or similar lighting technology) that provides targeted, hands-free illumination for the wearer. Its primary purpose is to light up the space in front of the wearer, making it ideal for tasks like reading, walking, or other activities in low-light conditions. The light source is designed to be low-power, long-lasting, and durable, integrated seamlessly into the lanyard with the two frame rods for minimal impact on the comfort or appearance of the eyewear. It offers a unique and practical solution for those needing extra light while maintaining the look and functionality of their eyewear.

In one suitable implementation, the two individual frame rods replace the two temples of the eyewear, wherein the two individual light sources are located on the terminal ends of the individual frame rods. The two individual frame rods replace the traditional temples of the eyewear, with each frame rod taking the place of one temple on either side of the eyewear's rim. At the terminal ends of these frame rods, there are individual light sources fixed in place. These light sources are strategically positioned at the ends of the rods, where the temples would typically be, providing illumination to the space in front of the wearer. The design of the frame rods with integrated lighting serves a functional purpose, allowing the wearer to benefit from both the structural support of the frame rods and the practical addition of light, which can be used for various tasks, such as reading or navigating low-light environments. This setup transforms the eyewear into something more than just a pair of glasses, offering a dual-purpose solution that combines vision correction with enhanced visibility.

In still further implementations, the frame rod is configured to be swapped to the multiple eyewear. The frame rod is designed with the flexibility to be easily swapped between multiple eyewear frames. This feature allows the wearer to interchange the frame rod with different pairs of eyewear, offering versatility in both style and functionality. Whether the wearer wants to change their eyewear for a different occasion or update their look, the frame rod can be seamlessly transferred to other frames without the need for a complete replacement. This design enhances the usability of the frame rod, allowing it to serve multiple purposes across different eyewear, making it a practical and adaptable accessory.

In still other implementations, the power source is connected to the light source, and wherein the power source is configured to be rechargeable using external power sources. The power source is directly connected to the light source, providing the necessary energy for it to function. The power source is configured to be rechargeable, allowing it to be replenished using external power sources. This means that instead of needing to replace the power source or rely on disposable batteries, the user can simply recharge the power source when it runs low, ensuring long-term use and reducing waste. The ability to recharge the power source adds a layer of practicality to the design, making it more sustainable and efficient for the wearer.

In still other implementations, the frame rod is a single molded structure, wherein the frame rod houses electronic circuitry within the frame rod. The frame rod is designed as a single, molded structure, seamlessly created to function as a unified piece. This structure is not only designed for durability and stability but also incorporates electronic circuitry and the power source within the frame rod itself. The circuitry is housed carefully inside the frame rod, ensuring that all the necessary components are contained within the rod's design without adding external bulk or disrupting its appearance. This integration of electronics allows the frame rod to perform its intended function likely powering a light source or other features while maintaining a sleek, streamlined look. The design of the frame rod as a single molded piece with internal circuitry makes the eyewear both functional and aesthetically clean, avoiding the need for external wires or components.

An exemplary electronic circuitry for the illuminated eyewear fixture is described in this paragraph. The electronic circuitry used in the illuminated eyewear fixture is a carefully designed system that powers and controls the light source embedded in the frame rod. At the heart of this system is the power supply, typically a rechargeable battery, which stores electrical energy and provides the necessary power to the light source when needed. The power supply is connected to the light source via a power management integrated circuit (PMIC) that regulates the voltage and current to ensure the light source operates within safe limits. The PMIC also ensures that the power is used efficiently, extending battery life and preventing overloading. A microcontroller is used that acts as the central unit, directing the operations of the light source based on the user's commands or preset conditions. The microcontroller can adjust settings such as brightness or turn the light source on and off, allowing for a customizable experience. The activation of the light source is made easy through a switch or activation mechanism integrated into the frame rod, enabling the wearer to control the light without any external controls. The light source itself is typically made of energy-efficient LEDs or OLEDs, chosen for their long-lasting and bright output while consuming minimal power. These LEDs are connected to the power circuitry and receive power when the system is activated. To ensure that the light source and other components operate smoothly, the circuitry includes resistors to regulate current flow, capacitors to stabilize the power supply, and sometimes inductors to further smooth power fluctuations. Additionally, a current-limiting circuit is employed to protect the light source from receiving excessive current, which could lead to damage or malfunction. The electronic circuitry may also include heat management components, such as heat sinks, to dissipate any excess heat generated by the light source, ensuring that the system operates efficiently without overheating. In more advanced designs, sensors might be incorporated to automatically adjust the light based on environmental factors, such as dimming the light when ambient light increases or turning off when no motion is detected.

In still other implementations, the two frame rods are connected using at least one electrical wire extending from the other terminal end opposite to the light source, wherein the electrical wire connects the power source to both the light sources on the two frame rods and is configured to work as a lanyard for the eyewear. The two frame rods are linked together by an electrical wire that extends from the terminal end opposite the light source, creating a connection between them. This wire plays a dual role. It not only connects the power source to both light sources on the frame rods, ensuring they receive the necessary power, but it is also configured to function as a lanyard for the eyewear. The lanyard aspect of the wire makes the eyewear easier to wear and carry, allowing it to hang around the user's neck when not in use. By serving both an electrical and practical purpose, the wire ties the components of the illuminated eyewear together, providing a functional and convenient solution for the wearer while maintaining the necessary power supply for the light sources.

It will be further understood that still further changes and variations in the details, materials, and arrangements of the components, parts, and features which have been described and illustrated may be made. All such modifications are deemed to be within the scope of this disclosure, as defined by the appended claims.

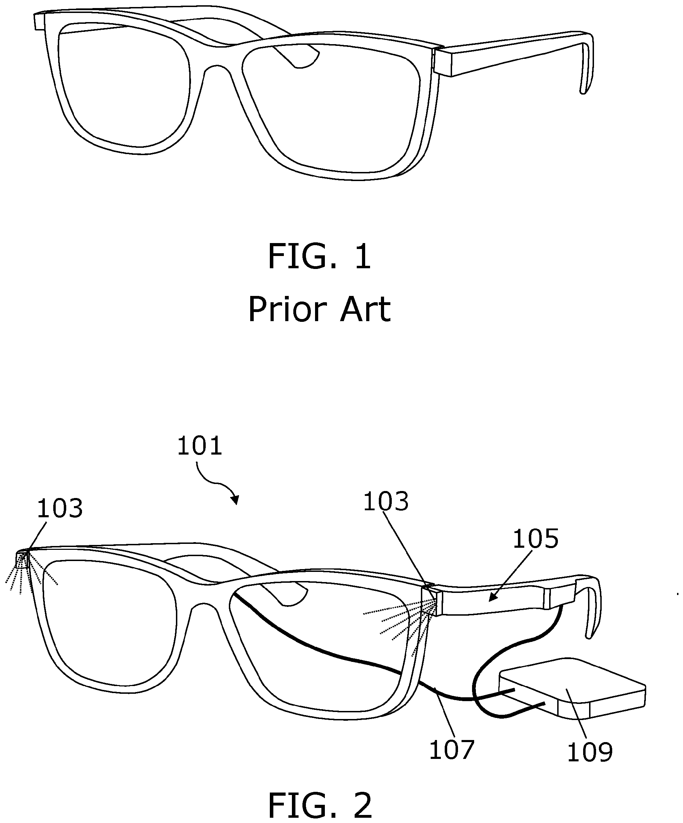

Fig. 1 is an isometric view of regular eyewear which is a prior art. The eyewear of Fig.1 uses temples having no illumination and is attached to the rim of the eyewear using screws and hinges.

Fig. 2 is an exploded, isometric view of an illuminated eyewear fixture 101 is provided. The illuminated eyewear fixture 101 comprises at least one frame rod 105; at least one power source 109 integrated within a lanyard 107 of the eyewear; at least one light source 103 fixed at one of the terminal ends of the frame rod 105; wherein the frame rod 105 is removably attached to a rim of an eyewear that houses at least one lens, by replacing temples of the eyewear, wherein the light source is configured to be located at outer edges of the rim when the frame rod 105 is attached to the rim, and wherein the light source 103 is configured to light up space and objects in front of the eyewear.

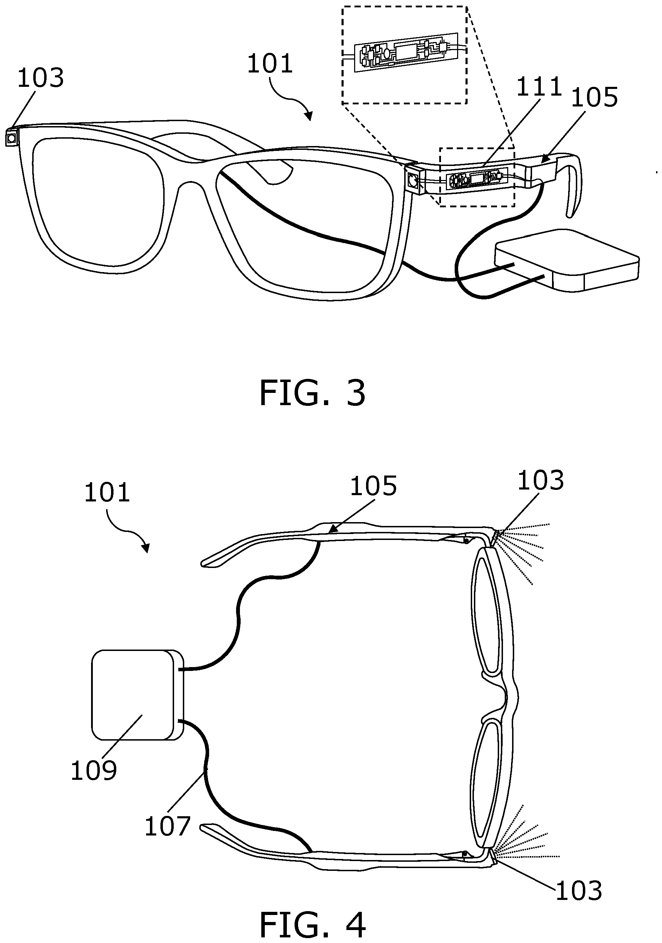

Fig. 3 is an exploded isometric view of one possible implementation of the illuminated eyewear fixture 101 according to the present disclosure. The illuminated eyewear fixture 101 comprises at least one frame rod 105. The frame rod 105 comprises a housing within which an electronic circuitry 111 is housed. The electric circuitry 111 is a miniaturized circuitry. The electric circuitry 111 is connected to the light source 103 fixed at one of the terminal ends of the frame rod 105. The electric circuitry 111 is also connected to the power source 109 using the wires running within the lanyard 107. Particularly, frame rods 105 are connected using at least one electrical wire extending from the other terminal end opposite to the light source 103, wherein the electrical wire connects the power source to both the light sources 103 on the two frame rods 105 and is configured to work as the lanyard 107 for the eyewear.

Fig. 4 is a top, plan view of the implementation of an illuminated eyewear fixture according to the present disclosure. The illuminated eyewear fixture 101 comprises at least one frame rod 105; at least one power source 109 integrated within a lanyard 107 of the eyewear; at least one light source 103 fixed at one of the terminal ends of the frame rod 105; wherein the frame rod 105 is removably attached to a rim of an eyewear that houses at least one lens, by replacing temples of the eyewear, wherein the light source is configured to be located at outer edges of the rim when the frame rod 105 is attached to the rim, and wherein the light source 103 is configured to light up space and objects in front of the eyewear. The frame rod 105 comprises a housing within which an electronic circuitry 111 is housed. The electric circuitry 111 is a miniaturized circuitry. The electric circuitry 111 is connected to the light source 103 fixed at one of the terminal ends of the frame rod 105. The electric circuitry 111 is also connected to the power source 109 using the wires running within the lanyard 107. Particularly, frame rods 105 are connected using at least one electrical wire extending from the other terminal end opposite to the light source 103, wherein the electrical wire connects the power source to both the light sources 103 on the two frame rods 105 and is configured to work as the lanyard 107 for the eyewear.

### List of figures

- 101: illuminated eyewear fixture
- 103: light source
- 105: frame rod
- 107: lanyard
- 109: power source
- 111: electric circuitry

## Claims

1. An illuminated eyewear fixture 101, comprising:
- at least one frame rod 105;
- at least power source 109 integrated within a lanyard 107 of the eyewear;
- at least one light source 103 fixed at one of terminal ends of the frame rod 105;
wherein the frame rod 105 is removably attached to a rim of an eyewear that houses at least one lens, by replacing temples of the eyewear,
wherein the light source 103 is configured to be located at outer edges of the rim when the frame rod 105 is attached to the rim, and
wherein the light source 103 is configured to light up space and objects in front of the eyewear.

2. The illuminated eyewear fixture 101 of claim 1 or 2, wherein at least one frame rod 105 is removably attached to the rim of the eyewear using at least one screw, and wherein the temples of the eyewear are replaced by the frame rod 105.

3. The illuminated eyewear fixture 101 according to any one of the preceding claims, wherein the two individual frame rods 105 replaces the two temples of the eyewear, and wherein the two individual light sources 103 are located on the terminal ends of the individual frame rods 105.

4. The illuminated eyewear fixture 101 according to any one of the preceding claims, wherein the frame rod 105 is configured to be swapped to the multiple eyewear.

5. The illuminated eyewear fixture 101 according to any one of the preceding claims, wherein the power source 109 is connected to the light source 103, and wherein the power source 109 is configured to be rechargeable.

6. The illuminated eyewear fixture 101 according to any one of the preceding claims, wherein the frame rod 105 is a single molded structure, and wherein the frame rod 105 houses electronic circuitry within the frame rod 105.

7. The illuminated eyewear fixture 101 according to any one of the preceding claims, wherein the two frame rods 105 are connected using at least one electrical wire extending from other terminal end opposite to the light source 103, wherein the electrical wire connects the power source 109 to both the light sources 103 on the two frame rods 105 and configured to work as the lanyard 107 for the eyewear.

8. The illuminated eyewear fixture 101 according to any one of the preceding claims, wherein the power source 109 is integrated within the lanyard 107 of the eyewear using at least one housing for the power source 109, and wherein the housing of the power source 109 is located in the middle of the lanyard 107.

9. The illuminated eyewear fixture 101 of claim 8, wherein the housing of the power source 109 comprises at least two magnetic connection points, and wherein the magnetic connection points are used to recharge the power source 109 of the eyewear.

## Amended claims

### Amended claims in accordance with Rule 137(2) EPC.

1. An illuminated eyewear fixture (101), comprising:
- at least one frame rod (105);
- at least one power source (109) integrated within a lanyard (107) of the eyewear;
- at least one light source (103) fixed at one of terminal ends of the frame rod (105);
wherein the frame rod (105) is removably attached to a rim of an eyewear that houses at least one lens, by replacing temples of the eyewear,
wherein the light source (103) is configured to be located at outer edges of the rim when the frame rod (105) is attached to the rim, and
wherein the light source (103) is configured to light up space and objects in front of the eyewear,
**characterized in**
**that** the outer edges of the rim are angled towards an area directly in front of a wearer.

2. The illuminated eyewear fixture (101) of claim 1 or 2, wherein at least one frame rod (105) is removably attached to the rim of the eyewear using at least one screw, and wherein the temples of the eyewear are replaced by the frame rod (105).

3. The illuminated eyewear fixture (101) according to any one of the preceding claims, wherein the two individual frame rods (105) replaces the two temples of the eyewear, and wherein the two individual light sources (103) are located on the terminal ends of the individual frame rods (105).

4. The illuminated eyewear fixture (101) according to any one of the preceding claims, wherein the frame rod (105) is configured to be swapped to the multiple eyewear.

5. The illuminated eyewear fixture (101) according to any one of the preceding claims, wherein the power source (109) is connected to the light source (103), and wherein the power source (109) is configured to be rechargeable.

6. The illuminated eyewear fixture (101) according to any one of the preceding claims, wherein the frame rod (105) is a single molded structure, and wherein the frame rod (105) houses electronic circuitry within the frame rod (105).

7. The illuminated eyewear fixture (101) according to any one of the preceding claims, wherein the two frame rods (105) are connected using at least one electrical wire extending from other terminal end opposite to the light source (103), wherein the electrical wire connects the power source (109) to both the light sources (103) on the two frame rods (105) and configured to work as the lanyard (107) for the eyewear.

8. The illuminated eyewear fixture (101) according to any one of the preceding claims, wherein the power source (109) is integrated within the lanyard (107) of the eyewear using at least one housing for the power source (109), and wherein the housing of the power source (109) is located in the middle of the lanyard (107).

9. The illuminated eyewear fixture (101) of claim 8, wherein the housing of the power source (109) comprises at least two magnetic connection points, and wherein the magnetic connection points are used to recharge the power source (109) of the eyewear.
